(19) Europäisches Patentamt / European Patent Office / Office européen des brevets

(11) **EP 2 070 255 B1**

(12) **EUROPÄISCHE PATENTSCHRIFT**

(45) Veröffentlichungstag und Bekanntmachung des Hinweises auf die Patenterteilung:
**28.03.2018  Patentblatt 2018/13**

(21) Anmeldenummer: **07820616.6**

(22) Anmeldetag: **26.09.2007**

(51) Int Cl.:
*H04L 9/32* (2006.01)          *H04L 9/30* (2006.01)

(86) Internationale Anmeldenummer:
**PCT/EP2007/060221**

(87) Internationale Veröffentlichungsnummer:
**WO 2008/037742 (03.04.2008 Gazette 2008/14)**

(54) **AUTHENTIFIKATIONSVERFAHREN UND KOMMUNIKATIONSSYSTEM ZUR AUTHENTIFIKATION**

AUTHENTICATION METHOD AND COMMUNICATIONS SYSTEM USED FOR AUTHENTICATION

PROCÉDÉ D'AUTHENTIFICATION ET SYSTÈME DE COMMUNICATIONS UTILISÉ POUR UNE AUTHENTIFICATION

(84) Benannte Vertragsstaaten:
**DE ES FR GB IT**

(30) Priorität: **29.09.2006  DE 102006046215**
**21.12.2006  DE 102006060760**

(43) Veröffentlichungstag der Anmeldung:
**17.06.2009  Patentblatt 2009/25**

(73) Patentinhaber: **Siemens Aktiengesellschaft**
**80333 München (DE)**

(72) Erfinder:
• **BRAUN, Michael**
  **81825 München (DE)**
• **HESS, Erwin**
  **85521 Ottobrunn (DE)**
• **KARGL, Anton**
  **80639 München (DE)**
• **MEYER, Bernd**
  **81739 München (DE)**

(56) Entgegenhaltungen:
**WO-A-96/37064**

• **ELSAYED MOHAMMED, A.E. EMARAH, KH. EL-SHENNAWY: "Elliptic curve cryptosystems on smart cards" SECURITY TECHNOLOGY, 2001 IEEE 35TH INTERNATIONAL CARNAHAN CONFERENCE ON, [Online] Oktober 2001 (2001-10), Seiten 213-222, XP002467960 ISBN: 0-7803-6636-0 Gefunden im Internet: URL:http://ieeexplore.ieee.org/iel5/7622/2 0784/00962835.pdf?arnumber=962835> [gefunden am 2008-02-07]**
• **ORS S B ET AL: "Hardware implementation of an elliptic curve processor over GF(p )" 24. Juni 2003 (2003-06-24), APPLICATION-SPECIFIC SYSTEMS, ARCHITECTURES, AND PROCESSORS, 2003. PROCEEDINGS. IEEE INTERNATIONAL CONFERENCE ON 24-26 JUNE 2003, PISCATAWAY, NJ, USA,IEEE, PAGE(S) 420-430 , XP010645242 ISBN: 0-7695-1992-X das ganze Dokument**
• **ATENIESE G ET AL ASSOCIATION FOR COMPUTING MACHINERY: "UNTRACEABLE RFID TAGS VIA INSUBVERTIBLE ENCRYPTION" 7. November 2005 (2005-11-07), PROCEEDINGS OF THE 12TH. ACM CONFERENCE ON COMPUTER AND COMMUNICATIONSSECURITY. (CCS'05). ALEXANDRIA, VA, NOV. 7 - 11, 2005, ACM CONFERENCE ON COMPUTER AND COMMUNICATIONS SECURITY, NEW YORK, NY : ACM, US, PAGE(S) 92-101 , XP001241617 ISBN: 1-59593-226-7 das ganze Dokument**

**Beschreibung**

Die Erfindung betrifft ein Authentifikationsverfahren, sowie ein Kommunikationssystem zur Authentifikation.

Die vorliegende Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend mit Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hansa-Verlag, dritte aktualisierte Auflage, 2002, verwiesen.

Bei heute bekannten RFID-Systemen wird typischerweise ein von einer Basisstation (oder Lesestation oder Reader) ausgesendetes elektromagnetisches Signal von dem passiven Transponder (oder Tag) aufgenommen, der daraus die im Transponder benötigte Energie gewinnt. In den meisten auf UHF oder Mikrowellen basierenden RFID-Systemen erfolgt neben dieser unidirektionalen Energieübertragung auch eine typischerweise bidirektionale Datenkommunikation auf der Basis eines so genannten Challenge/Response-Verfahrens. Dabei sendet die Basisstation fortwährend Anfragesignale (Data Request, Challenge) aus, die lediglich dann beantwortet werden, wenn sich ein entsprechender Transponder im Wirkungsbereich dieser Basisstation befindet. In diesem Falle reagiert der sich in der unmittelbaren Umgebung der Basisstation befindliche Transponder mit einem Antwortsignal (Response). Erst nach Erhalt eines vollständigen und gültigen Kommandos erfolgt eine Datenkommunikation zwischen Transponder und Basisstation. Der Transponder kann nun synchron oder asynchron zur Basisstation betrieben werden. Solche RFID-Transponder werden beispielsweise zur Kennzeichnung von Gegenständen, wie z.B. Waren, Dokumenten und dergleichen, verwendet.

Im Unterschied zu einer herkömmlichen drahtgestützten Datenkommunikation erfolgt bei dieser Art der Datenkommunikation die Datenkommunikation zwischen Basisstation und einem entsprechenden Transponder nahezu eigenständig und gewissermaßen im Hintergrund, ohne dass ein Benutzer überhaupt anwesend sein muss. D. h. die Datenkommunikation wird aufgenommen, sobald sich ein authentifizierter Transponder im Wirkungsbereich der zugehörigen Basisstation befindet. Beispielsweise beim Auslesen eines Datenträgers, wie z. B. einer Diskette, einem USB-Stick oder Ähnlichem, muss dieser von dem Benutzer bewusst in Kontakt mit einem entsprechenden Lesegerät gebracht werden und im Falle einer drahtgebundenen Datenkommunikation die Datenkommunikation von dem Benutzer ebenfalls bewusst eingeleitet werden. Dies ist bei der RFID-basierten Datenkommunikation nicht der Fall.

Dies hat einige signifikante Vorteile, z.B. bei der Identifikation im Logistikbereich, in Warenhäusern und dergleichen. Allerdings hat diese Technologie der RFID-basierten Datenkommunikation auch einige gravierende Nachteile, die es bei vielen Anwendungen zu beachten gibt.

Ein solches Problem bezieht sich auf ein unberechtigtes Auslesen von in einem RFID-Transponder enthaltenen Daten, insbesondere dann, wenn es sich bei diesen Daten um sicherheitskritische Daten handelt. Aus diesen Gründen umfasst ein RFIDbasiertes Datenkommunikationssystem typischerweise auch einen Sicherheitsmechanismus, der z. B. die Datenkommunikation dahingehend absichert, dass ein Sicherheitscode von der Basisstation auf das Sendesignal aufmoduliert wird, der lediglich von den an der Datenkommunikation zugelassenen Transpondern decodiert und ausgewertet werden kann. Nach erfolgreicher Auswertung sendet der an der Datenkommunikation zugelassene, also authentifizierte Transponder ein Antwortsignal, das ebenfalls einen Sicherheitscode enthält, an die Basisstation zurück, welcher dann wiederum in der Basisstation ausgewertet werden kann. Mittels dieser Sicherheitscodes erfolgt also sowohl im Transponder als auch in der Basisstation eine beidseitige Authentifikation, um zu vermeiden, dass sich unbemerkt ein unberechtigter Nutzer (oder Angreifer) in die Datenkommunikation einkoppeln und somit sicherheitskritische Daten auslesen kann.

Eine solche Authentifikation kann beliebig aufwändig gestaltet sein. Allerdings besteht eine wesentliche Randbedingung bei der RFID-basierten Datenkommunikation darin, dass eine möglichst einfache und möglichst schnelle Datenkommunikation zwischen Basisstation und Transponder stattfindet. Dies liegt zum Einen daran, dass der Transponder typischerweise nur über geringe Ressourcen, d. h. einerseits über geringe Energieressourcen und andererseits über geringe Speicher- und Rechenressourcen, verfügt, sodass bei der Authentifikation typischerweise möglichst geringe Datenmengen ausgewertet und authentifiziert werden sollten. Andererseits sollte diese Authentifikation auch möglichst schnell durchgeführt werden, da sich vor allem bei dynamischen RFID-basierten Datenkommunikationssystemen der zu authentifizierende Transponder sehr häufig nur für eine geringe Zeitspanne im Wirkungsbereich der jeweiligen Basisstation befindet. Innerhalb dieser kurzen Zeit muss einerseits eine Datenkommunikationsverbindung aufgebaut werden, diese authentifiziert werden und anschließend der Datenaustausch erfolgen.

Bei der zukünftig zu erwartenden Massenanwendung von RFID-basierten Datenkommunikationssystemen insbesondere im gewerblichen, allerdings auch im privaten Umfeld, besteht zum Schutz der Datensicherheit des Nutzers der gesteigerte Bedarf, einfache, aber nichtsdestotrotz effektive Maßnahmen gegen das unerlaubte Auslesen von RFID-basierten Daten bereitzustellen. Man unterscheidet hier die folgenden drei Kategorien des Schutzes und somit der Abhörsicherheit:

## 1. Schutz privater Daten (Data Privacy):

Bei der Sicherstellung des Schutzes privater Daten gilt, dass ein unberechtigter Nutzer durch ein Abhören der Datenkommunikation zwischen Basisstation und Transponder oder alternativ auch durch ein aktives Ansprechen des Transponders nicht auf dessen Identität schließen darf. Ansonsten würde dieser unberechtigte Nutzer sicherheitskritische, sensitive Daten, welche z. B. auf dem Transponder abgelegt sind, erhalten. Solche sensitiven Daten können z.B. benutzerspezifische Informationen enthalten.

## 2. Schutz der örtlichen Privatsphäre (Location Privacy):

Zur Sicherstellung der örtlichen Privatsphäre muss verhindert werden, dass ein unberechtigter Nutzer in der Lage ist, durch Abhören der Datenkommunikation zwischen Basisstation und Transponder oder auch etwa durch ein aktives Ansprechen des Transponders zu zwei verschiedenen Zeitpunkten eine ortsbezogene Information über den Transponder erhält. Insbesondere muss also sichergestellt werden, dass ein unberechtigter Nutzer daraus nicht ableiten kann, dass es sich um jeweils denselben oder etwa auch verschiedene Transponder handelt, da er ansonsten so genannte Bewegungsprofile (Tracking) von einzelnen Transpondern und damit auch deren Nutzern ableiten kann. Auch hier handelt es sich um sicherheitskritische, sensitive Informationen, die es zu schützen gilt.

## 3. Gewährleisten der Vorwärtssicherheit:

Schließlich darf es einem unberechtigten Nutzer auch nicht möglich sein, eine beispielsweise in der Vergangenheit aufgezeichnete Datenkommunikation zwischen Basisstation und Transponder jeweils einem bestimmten Transponder zuzuordnen, selbst wenn er zu einem späteren Zeitpunkt geheime Daten dieses bestimmten Transponders in Erfahrung bringt.

Um den eben genannten Schutz bzw. die entsprechende Sicherheit gewährleisten zu können, müssen einem unberechtigten Nutzer die von einem Transponder an die Basisstation zurückgesendeten Antwortsignale bei mehreren Anfragen verschieden und zufällig erscheinen, selbst dann, wenn die Basisstation mehrmals nacheinander das gleiche Anfragesignal an denselben Transponder sendet. Hierzu gibt es die verschiedensten Ansätze, welche eine möglichst hohe Sicherheit gewährleisten sollen. Einige davon seien nachfolgend kurz umrissen:

In der Literaturstelle [1] ist eine Vorgehensweise zum Privacy-Schutz für RFID-Tags beschrieben. Bei dieser Lösung ist ein eindeutiger Identifikationscode (ID) vorhanden, die durch eine zufällige temporäre Identifikationsnummer META-ID ersetzt wird. Ein Transponder antwortet ausschließlich auf Anfragen, die die META-ID enthalten, wobei nur eine zum System gehörende, berechtigte Basisstation daraus die tatsächliche Identität des Transponders ableiten kann. Hier ist zwar ein Data-Privacy-Schutz gegeben, nicht jedoch ein Schutz gegen Tracking bzw. gegen Abhören zu zwei verschiedenen Zeitpunkten, so dass hier unerwünschterweise auch Bewegungsprofile erkannt werden können.

Die Literaturstelle [2] beschreibt ein Verfahren, bei dem ein Identifikationscode (ID) bei jedem Senden randomisiert wird. Das Randomisieren geschieht hier mit Hilfe einer so genannten Hash-Funktion. Diese Hash-Funktion erfordert jedoch einen relativ großen Hardwareaufwand und somit Rechenaufwand für deren Implementierung auf einem Transponder. Nachteilig ist hier außerdem, dass dieses Verfahren keine Vorwärtssicherheit bietet.

Ein weiteres Verfahren auf Basis einer Hardware-Implementierung basierend auf AES wird in der Literaturstelle [3] beschrieben. Bei diesem Verfahren handelt es sich um eine Abwandlung des so genannten Three-Pass-Mutual-Authentication-Protokolls nach dem Standard ISO 9798. Dieses Protokoll bietet zwar Schutz gegen Tracking, jedoch keine Vorwärtssicherheit.

In der Literaturstelle [4] ist ein Verfahren basierend auf einer Hash-Funktion beschrieben. Hier wird eine geheime Information $S_1$ auf einem Transponder nach jeder Anfrage eines Lesegeräts durch $S_{i+1}=$Hash $(S_i)$ erneuert. Durch diese Vorgehensweise ist die Vorwärtssicherheit gewährleistet, weil bei Kenntnis des aktuellen Zustandes $S_i$ nicht auf frühere Zustände $S_k$ (mit $k>i$) geschlossen werden kann. Wegen des hierfür erforderlichen Hardwareaufwands und den damit verbundenen Kosten ist dieses Verfahren jedoch in der Praxis für Transponder wenig geeignet.

Zur Sicherstellung der Datenkommunikation zwischen Basisstation und Transponder erfolgt die Datenkommunikation mittels des Austauschs kryptographischer Daten. Nahezu alle bisher bekannten Verfahren, wie z. B. die in den Literaturstellen [1], [2], [3], [4] beschriebenen Verfahren, basieren auf symmetrischer Kryptographie. Bei solchen Systemen enthält ein jeweiliger Transponder einen geheimen Schlüssel, der in der Basisstation hinterlegt ist oder zumindest auf welchen die Basisstation einen sicheren Zugriff hat, beispielsweise indem der geheime Schlüssel in einer zentralen, abgesicherten Datenbank abgelegt ist.

Neben den symmetrischen Verschlüsselungsverfahren existieren auch so genannte asymmetrische Verschlüsselungsverfahren. Diese asymmetrischen Kryptographieverfahren basieren auf einem privaten und einem öffentlichen Schlüssel. Dabei wird der öffentliche Schlüssel aus einem privaten Schlüssel mittels eines vorbestimmten Algorithmus generiert. Wesentlich für diese kryptographischen Verschlüsselungsverfahren ist, dass eine Umkehrung, das heißt eine Bestimmung des privaten Schlüssels aus dem öffentlichen Schlüssel, in endlicher Zeit mit den zur Verfügung stehenden Rechenkapazitäten kaum bewältigbar ist.

Es hat sich als vorteilhaft erwiesen, kryptographische Verschlüsselungsalgorithmen basierend auf elliptischen Kurven zu verwenden, da diese eine hohe Sicherheit bei kurzen Schlüssellängen gewähren. Solche kryptographische Verschlüsselungsverfahren auf Basis elliptischer Kurven sind sehr effizient, was insbesondere daran liegt, dass bei diesen Verfahren im Gegensatz zu bekannten kryptographischen Verfahren keine Angriffsmethode mit subexponentieller Laufzeit bekannt ist. Anders ausgedrückt bedeutet dies, dass der Sicherheitsgewinn pro Bit der verwendeten Sicherheitsparameter bei Verfahren auf der Basis elliptischer Kurven höher ist und somit für praktische Anwendungen deutlich kürzere Schlüssellängen verwendet werden können. Somit sind kryptographische Verfahren auf der Basis elliptischer Kurven performanter und benötigen eine geringere Bandbreite zur Übertragung der Systemparameter als andere kryptographische Verfahren bei vergleichbarem Grad an erreichbarer Sicherheit.

Die kryptographischen Verfahren stellen somit einen Kompromiss zwischen einer geforderten Sicherheit und dem rechnerischen Aufwand beim Verschlüsseln von Daten dar. In der Deutschen Patentanmeldung DE 101 61 138 A1 ist dargestellt, dass eine Bestimmung des skalaren Vielfachen eines Punktes allein anhand der X-Koordinaten dieses Punktes bereits ohne Hinzuziehen der Y-Koordinate möglich ist. Entsprechende Rechenvorschriften sind für beliebige Körper ebenfalls in dieser Druckschrift beschrieben. Hierdurch lassen sich wesentlich effizientere Implementierungen der Punktarithmetik, zum Beispiel einer Montgomery-Leiter, für die SkalarMultiplikationen, eine geringere Anzahl an Körpermultiplikationen pro Punktaddition und eine geringere Anzahl von Registern für die Punktdarstellung der Zwischenergebnisse erreichen.

Weitere Aspekte zum Hintergrund der vorliegenden Erfindung hinsichtlich Verschlüsselungen sind in den folgenden Dokumenten ersichtlich:

D1    WO 96/37064 A (SIEMENS AG [DE]; HORN GUENTHER [DE]; MUELLER KLAUS [DE]; KESSLER VOLKE) 21. November 1996 (1996-11-21)

D2    ELSAYED MOHAMMED, A.E. EMARAH, KH. EL-SHENNAWY; "Elliptic curve cryptosystems on smart cards" SECURITY TECHNOLOGY, 2001 IEEE 35TH INTERNATIONAL CARNAHAN CONFERENCE ON, [Online] Oktober 2001 (2001-10), Seiten 213-222, XP002467960 ISBN: 0-7803-6636-0 Gefunden im Internet: URL:http://ieeexplore.ieee.org/ iel5/7622/20784/00962835.pdf?arnumber=962835 [gefunden am 2008-02-07]

D3    ORS S B ET AL: "Hardware implementation of an elliptic curve processor over GF(p)" 24. Juni 2003 (2003-06-24), APPLICATION-SPECIFIC SYSTEMS, ARCHITECTURES, AND PROCESSORS, 2003. PROCEEDINGS. IEEE INTERNATIONAL CONFERENCE ON 24-26 JUNE 2003, PISCATAWAY, NJ, USA,IEEE, PAGE(S) 420-430, XP010645242 ISBN: 0-7695-1992-X

D4    ATENIESE G ET AL ASSOCIATION FOR COMPUTING MACHINERY: "UNTRACEABLE RFID TAGS VIA INSUBVERTIBLE ENCRYPTION" 7. November 2005 (2005-11-07), PROCEEDINGS OF THE 12TH. ACM

Das Dokument D1 offenbart dabei insbesondere ein Authentifizierungsverfahren zwischen Teilnehmern (einer Benutzercomputereinheit und einer Netzcomputereinheit) eines Kommunikationssystems unter Verwendung eines asymmetrischen Verschlüsselungsalgorithmus auf Basis elliptisoher Kurven, mit den Schritten zum Bereitstellen eines ersten und zumindest eines zweiten Teilnehmers, die einen ersten bzw. zweiten, nur dem jeweiligen Teilnehmer bekannten, geheimen Schlüssel aufweisen und mit einem öffentlichen Schlüssel, zum Authentifizieren einer von dem ersten Teilnehmer (der Netzcomputereinheit) gesendeten Anfrage hinsichtlich der Gültigkeit eines darin enthaltenen, dem ersten Teilnehmer zugehörigen ersten Zertifikats, zum Berechnen und randomisierten Verschlüsseln der zu der Anfrage gehörenden Antwort des zweiten Teilnehmers (der Benutzercomputereinheit), und zum Entschlüsseln und Authentifizieren der von dem zweiten Teilnehmer gesendeten Antwort hinsichtlich der Gültigkeit des darin enthaltenen Zertifikats. Die Druckschriften D2-D4 offenbaren weitere Einzelheiten von Verschlüssungsaspekten.

Vor diesem Hintergrund besteht die Aufgabe der vorliegenden Erfindung darin, ein Verfahren zur Authentifizierung zwischen Teilnehmern und ein entsprechendes Kommunikationssystem bereitzustellen, welche einerseits eine möglichst hohe Sicherheit bereitstellen und welche hierfür andererseits einen möglichst geringen Hardware-Aufwand erfordern.

Erfindungsgemäß wird diese Aufgabe durch ein Authentifikationsverfahren mit den Merkmalen des Patentanspruchs 1 und durch ein Kommunikationssystem mit den Merkmalen des Patentanspruchs 8 gelöst. Weitere vorteilhafte Ausführungsformen und Verbesserungen sind in den Unteransprüchen angegeben. Bevor nun die Ausführungsformen der Erfindung unter Bezugnahme auf die beiliegenden Zeichnungen näher erläutert werden, werden zunächst nachstehend einige einzelne Aspekte der Erfindung hervorgehoben.

Gemäß einiger Aspekte der Erfindung ist vorgesehen:

- Ein Authentifikationsverfahren zwischen Teilnehmern eines Kommunikationssystems unter Verwendung eines asymmetrischen Verschlüsselungsalgorithmus auf Basis elliptischer Kurven, mit den Schritten: Bereitstellen eines ersten und zumindest eines zweiten Teilnehmers, die einen ersten bzw. zweiten, nur dem jeweiligen Teilnehmer bekannten, geheimen Schlüssel aufweisen und mit einem öffentlichen Schlüssel; Authentifizieren einer von dem ersten Teilnehmer gesendeten Anfrage hinsichtlich der Gültigkeit eines darin enthaltenen, dem ersten Teilnehmer zugehörigen ersten Zertifikats; Berechnen der zu der Anfrage gehörenden Antwort des zweiten Teilnehmers; Randomisiertes Verschlüsseln der berechneten Antwort und eines dem zweiten Teilnehmer zugehörigen zweiten Zertifikats unter Verwendung des öffentlichen Schlüssels; Entschlüsseln und Authentifizieren der von dem zweiten Teilnehmer gesendeten Antwort hinsichtlich der Gültigkeit des darin enthaltenen zweiten Zertifikats.

- Ein Kommunikationssystem zur zweiseitigen Authentifikation unter Verwendung eines asymmetrischen Verschlüsselungsalgorithmus auf Basis elliptischer Kurven mittels eines erfindungsgemäßen Authentifikationsverfahrens.

Die der vorliegenden Erfindung zugrunde liegende Idee besteht also darin, ein neuartiges, zweiseitiges Authentifikationsprotokoll nach dem Challenge/Response-Verfahren bereitzustellen, bei dem sich die Basisstation und der Transponder gegenseitig authentifizieren. Diese Authentifikation basiert auf asymmetrischer Kryptographie auf Basis elliptischer Kurven. Bei diesem Authentifikationsverfahren werden also die vom Transponder an die Basisstation zurück übertragenen Daten asymmetrisch randomisiert verschlüsselt. Der besondere Vorteil besteht darin, dass lediglich solche Basisstationen, die einen korrekten, also zugelassenen privaten Schlüssel besitzen, dazu ausgelegt sind, die von dem Transponder zurück übertragenen Antwortdaten zu entschlüsseln und somit zu "verstehen". Für alle anderen, also für die nicht zugelassenen Basisstationen oder Nutzer erscheinen die von dem Transponder zurück übertragenen Antwortdaten zufällig. Auf diese Weise wird der Schutz der Privatsphäre des Transponders gewährleistet.

Das Authentifikationsverfahren basiert auf einem neuen, erweiterten Sicherheitsprotokoll für die Datenkommunikation. Dieses neue Sicherheitsprotokoll setzt auf einer so genannten Low Cost-Arithmetik für elliptische Kurven auf.

Gemäß einem weiteren Aspekt wird also ein effektives neues Identifikationsprotokoll zum Schutz privater Daten (Data Privacy) und der örtlichen Privatsphäre (Location Privacy, Tracking) bereitgestellt, welches auch eine größtmögliche Vorwärtssicherheit enthält. Ferner wird die dafür erforderliche Vorrichtung beschrieben. Das Verfahren basiert auf moderner asymmetrischer Kryptographie auf Basis elliptischer Kurven über einem endlichen Körper der Charakteristik 2, welche den Vorteil aufweist, dass deren Arithmetik auf einem sehr kostengünstigen Hardwaremodul realisierbar und somit insbesondere für RFID-Anwendungen geeignet ist.

Gegenüber anderen symmetrischen Authentifizierungsverfahren weist das ein Aspekt des Authentifizierungsverfahrens den Vorteil auf, dass auf Seiten der Basisstation keine gesicherte Anbindung an eine zentrale Back-End-Datenbank vorhanden sein muss, um dort einen privaten, geheimen Schlüssel für einen Transponder zu suchen, was wiederum den Hardwareaufwand für diese Implementierung signifikant senkt.

Gegenüber einer symmetrischen Lösung besteht auch nicht die Gefahr, dass eine Basisstation vorhanden ist, bei der man an den so genannten Masterschlüssel gelangen kann. Dadurch wäre nämlich das gesamte Geheimnis gebrochen und ein unberechtigter Nutzer könnte selbst gültige Transponder produzieren. Bei der erfindungsgemäßen Public-Key-Lösung kann nur eine Basisstation mit einem korrekten Schlüssel Daten aus den entsprechenden Transpondern auslesen.

Durch die Erfindung wird sehr effektiv verhindert, dass ein unberechtigter Nutzer an einen geheimen Schlüssel im Lesegerät oder einem Transponder gelangen kann, beispielsweise über eine zentrale Datenbank, und so Basisstationen nachbilden kann, mit denen er in der Lage wäre, zum Datenkommunikationssystem gehörende Transponder zu identifizieren oder etwa auch lediglich deren Privatsphäre (Location-Privacy und Data-Privacy) festzustellen.

Ein weiterer wichtiger Vorteil gemäß eines Aspekts des erfindungsgemäßen Authentifizierungsverfahrens besteht darin, dass in sehr einfacher Weise verschiedene Zugriffsrechte auf die Transponder von verschiedenen Basisstationen in so genannten Zertifikaten kodieren werden können. Dies bedeutet, dass in dem jeweiligen Zertifikat Informationen enthalten sind, ob eine Basisstation z.B. nur Leserechte oder zusätzlich auch Schreibrechte auf den entsprechenden Transponder besitzt.

Bei dem Authentifizierungsverfahren wird gemäß einem weiteren Aspekt ein zweiseitiges Authentifikationsprotokoll eingesetzt, bei dem sich ein erster Teilnehmer, z. B. eine Basisstation, und ein zweiter Teilnehmer, z. B. ein Transponder, gegenseitig authentifizieren. Das erfindungsgemäße Verfahren nutzt eine asymmetrische Kryptographie auf Basis elliptischer Kurven. Dieses Kryptographieverfahren hat gegenüber anderen Verfahren den Vorteil, dass die erforderliche Bitmenge für die Authentifikation gegenüber anderen Verfahren erheblich kürzer ist, wodurch die Bandbreite geringer ist. Dies ist im Zusammenhang mit Antennenempfängern, wie sie in Transpondern eingesetzt werden, von erheblichem Vorteil.

Vorteilhafte Ausgestaltungen und Weiterbildungen der Erfindung ergeben sich aus den weiteren Unteransprüchen sowie aus der Beschreibung in Zusammenschau mit den Figuren der Zeichnung.

Die Erfindung wird nachfolgend anhand der in Figuren der Zeichnung angegebenen Ausführungsbeispiele näher erläutert. Dabei zeigen:

Fig. la,lb    Beispiele einer elliptischen Kurve;

Fig. 2    ein Beispiel einer Addition unter Verwendung einer elliptischen Kurve;

Fig. 3    anhand eines Blockschaltbildes den Aufbau eines erfindungsgemäßen Kommunikationssystems;

Fig. 4    ein Blockschaltbild, welches das Prinzip des erfindungsgemäßen Authentifikationsverfahrens darstellt;

Fig. 5    ein Ablaufdiagramm zur Darstellung des erfindungsgemäßen Authentifikationsverfahrens auf Basis elliptischer Kurven.

In den Figuren der Zeichnung sind gleiche und funktionsgleiche Elemente, Merkmale und Signale, sofern nichts Anderes ausgeführt ist, mit denselben Bezugzeichen versehen.

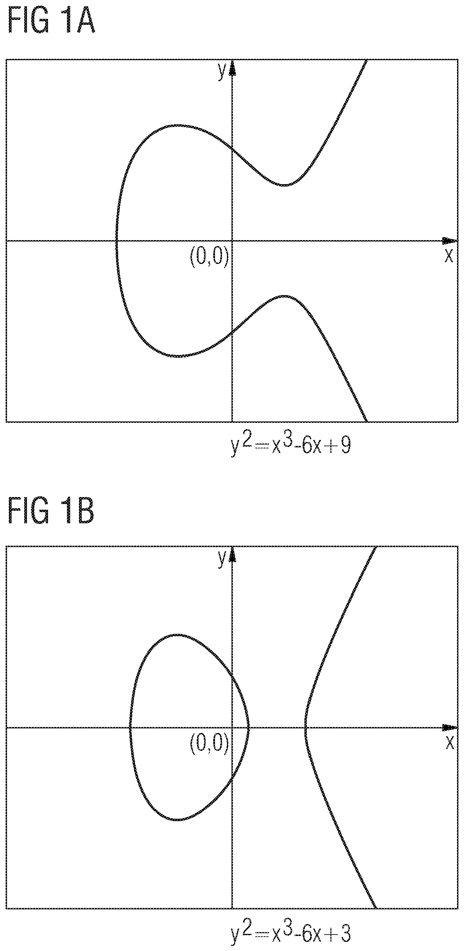

Das erfindungsgemäße Authentifikationsverfahren weist ein neues Sicherheitsprotokoll auf, welches auf einer Arithmetik für elliptische Kurven aufsetzt. Bevor das erfindungsgemäße Authentifikationsverfahren beschrieben wird, werden daher zunächst die wichtigsten Eigenschaften elliptischer Kurven anhand der Fig. 1a und 1b erläutert.

Eine elliptische Kurve über einem endlichen Körper (Galois-Feld) GF($2^d$) ist die Nullstellenmenge der kubischen Gleichung

$$y^2 + xy = x^3 + ax^2 + b. \quad (1)$$

x und y bezeichnen hier Variablen und die Koeffizienten a und b mit b≠0 bezeichnen Koeffizienten im Galois-Feld GF($2^d$).

In Fig. 1a und Fig. 1b sind beispielhaft zwei elliptische Kurven über den reellen Zahlen dargestellt.

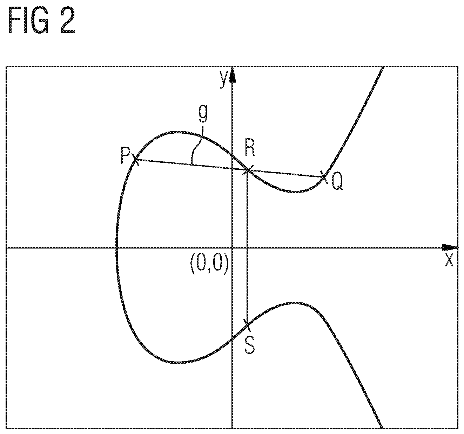

Unter Hinzunahme eines unendlich fernen Punktes als neutrales Element bildet diese Nullstellenmenge eine additive Gruppe, deren Gruppengesetz zumindest bei elliptischen Kurven über den reellen Körper geometrisch interpretiert werden kann. Eine solche additive Gruppe besteht aus einer Zahlenmenge und einer Addition (Gruppenoperation). Außerdem existiert in dieser Gruppe ein neutrales Element, das bei Addition zu einer Zahl aus der Zahlenmenge dessen Wert nicht ändert (beispielsweise die Null). Weiterhin existiert zu jedem Wert der Zahlenmenge ein inverses Element, sodass bei Addition des entsprechenden Wertes mit dem inversen Element das neutrale Element gewonnen wird. Wesentlich sind dabei zwei Ergebnisse aus der algebraischen Geometrie (siehe Fig. 2):

Jede Gerade schneidet eine elliptische Kurve in drei, nicht notwendigerweise voneinander verschiedenen Punkten. Zu je zwei, nicht notwendigerweise verschiedenen Punkten kann ein dritter Punkt berechnet werden, sodass die Summe der drei Punkte das neutrale Element darstellt. Seien P und Q (mit P≠-Q) zwei Punkte und g die Gerade durch diese Punkte P, Q, dann schneidet diese Gerade g die elliptische Kurve in einem dritten Punkt R. Durch Spiegeln von R an der X-Achse erhält man S=P+Q. Für den Fall P=-Q ist die Steigung von g unendlich und der dritte Schnittpunkt R ist der unendlich ferne Punkt.

Analog zur Definition der Skalarmultiplikation in Vektorräumen ist die Skalarmultiplikation auf elliptischen Kurven definiert. Es sei P ein Punkt einer elliptischen Kurve und k sei eine natürliche Zahl. Die Skalarmultiplikation k*P entspricht einer k-maligen Addition von P zu sich selbst. Diese Skalarmultiplikation k*P bildet den wesentlichen Baustein in kryptographischen Systemen basierend auf elliptischen Kurven. Bei kryptographisch starken elliptischen Kurven stellt die Skalarmultiplikation eine Einwegfunktion dar, d. h. sie ist in polynomieller Zeit berechenbar, aber nur in exponentieller Zeit invertierbar. Eine effiziente algorithmische Rekonstruktion des Skalars ist daher schwer vorstellbar. Diese Einwegfunktion bildet die Grundlage für kryptographische Authentifikationsverfahren auf der Basis elliptischer Kurven.

Eine bekannte Methode zur Implementierung solcher Skalarmultiplikationen auf der Basis elliptischer Kurven ist die so genannte Montgomery-Leiter. Die Montgomery-Leiter lässt sich in der Gestalt implementieren, dass zur Berechnung der X-Koordinate eines skalaren Vielfachen eines Punktes P nur die X-Koordinate von P und ausschließlich Additionen und Multiplikationen in dem Galoisfeld GF($2^d$) verwendet werden. Es sind hier keine aufwändigen Inversionen erforderlich.

Der genaue Algorithmus der Montgomery-Leiter, aufgerufen durch

$$(X_{kP}, Z_{kP}) \leftarrow \mathrm{MonMul}(k, x_P),$$

lautet wie folgt:

Eingangsparameter:

Skalar k = $(k_{n-1}, ..., k_0)$ in Binärdarstellung,
x-Koordinate $x_P$ des Punktes P.

Ausgangsparameter:

Koordinaten (X,Z) des Punktes k*P, so dass X/Z die affine x-Koordinate darstellt.

Verfahrensschritte des Algorithmus der Montgomery-Leiter (in der Programmiersprache (++)):

```
1)   X₁ ← 1, Z₁ ← 0, X₂ ← xₚ, Z₂ ← 1
2)   for i ← n-1 to 0 do
3)                        if kᵢ = 1 then
          {    T ← Z₁, Z₁ ← (X₁Z₂+X₂Z₁)², X₁ ← xₚZ₁
          +X₁X₂TZ₂,
4)                                     T ← X₂, X₂←X₂⁴+bZ₂⁴,
     Z₂ ← T²Z₂²                    }
5)                                     else    {    T ← Z₂, Z₂ ←
     (X₂Z₁+X₁Z₂)², X₂ ← xₚZ₂
                    +X₂X₁TZ₁,
6)                                     T ← X₁, X₁ ←X₁²+bZ₁⁴,
     Z₁ ← T²Z₁²                    }
7)   return (X₁,Z₁)
```

Die oben aufgeführten Additionen und Multiplikationen können im Galoisfeld $GF(2^d)$ mit einem relativ geringen Hardware-Aufwand durchgeführt werden. Der entsprechende Transponder wie auch die Basisstation benötigen hier lediglich einfache und kostengünstige Rechenwerke für die Durchführung dieser Rechenoperationen. Mittels eines rückgekoppelten Schieberegisters, das den Hauptbestandteil dieses Rechenwerkes darstellt, kann eine Multiplikation in d Takten durchgeführt werden, wobei eine Addition sogar in einem einzigen Takt realisiert werden kann.

Der oben beschriebene Montgomery-Algorithmus dient der effizienten Berechnung der Skalarmultiplikation, die zusammen mit dem Schieberegister ausgeführt werden können.

Das nachfolgend beschriebene erfindungsgemäße beidseitige Authentifikationsverfahren basiert auf diesem Montgomery-Algorithmus. Das Protokoll des erfindungsgemäßen Authentifikationsverfahrens ist eine Erweiterung einer einseitigen Authentifikation, bei der sich ein Transponder zunächst gegenüber einer Basisstation mittels des bekannten Challenge/Response-Verfahrens authentifiziert. Das erfindungsgemäße Authentifikationsverfahren bietet zusätzlich einen größtmöglichen Schutz der Privatsphäre des Transponders und eine Vorwärtssicherheit.

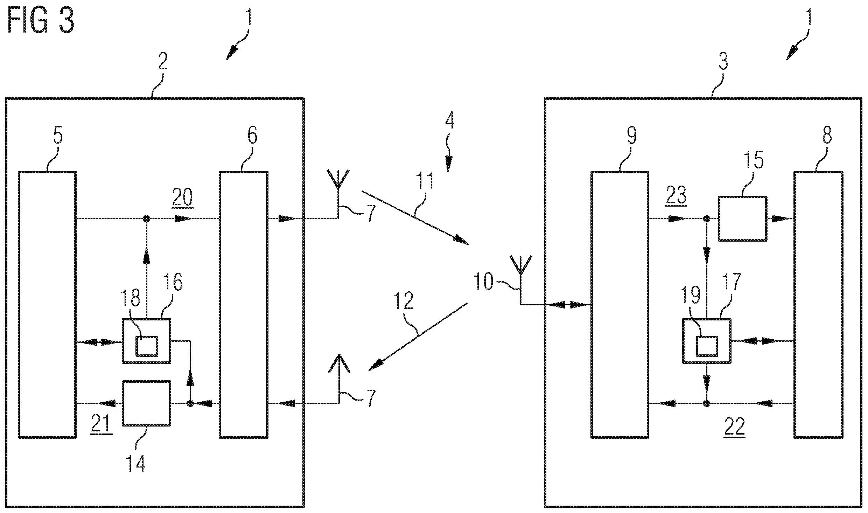

Bevor das erfindungsgemäße zweiseitige Authentifikationsverfahren beschrieben wird, wird nachfolgend anhand des Blockschaltbildes in der Fig. 3 zunächst der prinzipielle Aufbau eines erfindungsgemäßen Kommunikationssystem näher erläutert.

In Fig. 3 ist mit Bezugszeichen 1 ein Kommunikationssystem, beispielsweise ein RFID-Kommunikationssystem, bezeichnet. Das RFID-Kommunikationssystem 1 enthält einen ersten Teilnehmer (Basisstation 2) und einen Transponder 3. Basisstation 2 und einen zweiten Teilnehmer (Transponder 3) stehen über eine drahtlose Kommunikationsstrecke 4 in bidirektionaler kommunikativer Verbindung. Das Kommunikationssystem 1 kann zum Beispiel als so genanntes Master-Slave-Kommunikationssystem ausgebildet sein, wobei die Basisstation 2 z. B. als Master und der oder die Transponder 3 z. B. jeweils als Slave fungieren. Die Basisstation 2 umfasst eine Steuereinrichtung 5, eine Sende-/Empfangseinrichtung 6 sowie eine Sende-/Empfangsantenne 7. In gleicher Weise umfasst auch der Transponder eine Steuereinrichtung 8, eine Sende-/Empfangseinrichtung 9 sowie eine gemeinsame Sende-/Empfangsantenne 10.

Die Sende-/Empfangsantennen 7, 10 können als induktive Spulenantennen oder auch als Dipolantennen ausgebildet sein.

In den jeweiligen Steuereinrichtungen 5, 8 wird der Ablauf der Datenkommunikation gesteuert. Typischerweise enthält diese Steuereinrichtung eine Recheneinrichtung (Rechenwerk, CPU oder dergleichen), in welcher die Rechenoperationen insbesondere für die Authentifikation durchgeführt werden.

Die Steuerung der Datenkommunikation erfolgt jeweils über die basisstationsseitige Steuereinrichtung 5 und die transponderseitige Steuereinrichtung 8. Die Steuereinrichtung 5 der Basisstation 2 ist dazu ausgelegt, über die Antenne 7 hochfrequente Trägersignale 11 zu der Antenne 10 des Transponders 3 zu senden. In gleicher Weise sind die Steuereinrichtung 8 und die Sende-/Empfangseinrichtung 9 des Transponders 3 dazu ausgelegt, auf die gesendeten Trägersignale 11 hin entsprechende Antwortsignale 12 zurück zu der Basisstation 2 zusenden. Die Steuereinrichtungen 5, 8 können beispielsweise als programmgesteuerte Einrichtung, wie zum Beispiel als Mikrokontroller oder Mikroprozessor, ausgebildet sein oder auch in festverdrahteter Logik-Schaltung, wie zum Beispiel als FPGA oder PLD, implementiert sein.

Die Speicher 18, 19 enthalten typischerweise einen RAM-Speicher, in dem z. B. Rechenergebnisse abgelegt sind. Zusätzlich oder alternativ kann dieser Speicher 18, 19 auch einen EEPROM-Speicher aufweisen, in welchem Systemparameter, Parameter der verschiedenen Kommunikationsteilnehmer, wie z. B. ein teilnehmerspezifischer privater Schlüssel, ein öffentlicher Schlüssel, ein teilnehmerspezifisches Zertifikat oder dergleichen, abgelegt sind.

Die Basisstation 2 weist ferner eine Auswerteinrichtung 14 auf. Diese Auswerteeinrichtung 14 ist im Empfangspfad der Basisstation 2 angeordnet und dem Empfänger der Sende-/Empfangseinrichtung 6 nachgeschaltet angeordnet. In gleicher Weise weist auch der Transponder 3 eine Auswerteeinrichtung 15 im Empfangspfad 23 des Transponders 3 auf. In den jeweiligen Auswerteeinrichtungen 14, 15 erfolgt die Auswertung der empfangenen Daten einer Datenkommunikation. Insbesondere wird dort zunächst eine Demodulierung und Decodierung der empfangenen Daten vorgenommen.

Erfindungsgemäß weist nun sowohl die Basisstation 2 als auch der Transponder 3 ein Authentifikationsmodul 16, 17 auf, welche zwischen der jeweiligen Sende-/Empfangseinrichtung 6, 9 und Steuereinrichtung 5, 8 der Basisstation 2 bzw. des Transponders 3 angeordnet sind. Diese Authentifikationsmodule 16, 17 sind hier als gesonderte Module ausgebildet. Vorzugsweise ist dieses Authentifikationsmodul 16, 17 jedoch Bestandteil der jeweiligen Steuereinrichtung 5, 8.

Ein Authentifikationsmodul 16, 17 weist ferner einen Speicher 18, 19 auf, in welchem beispielsweise Daten, Schlüssel oder dergleichen, die für die Authentifikation erforderlich sind oder zwischengespeichert werden müssen, abgelegt sind.

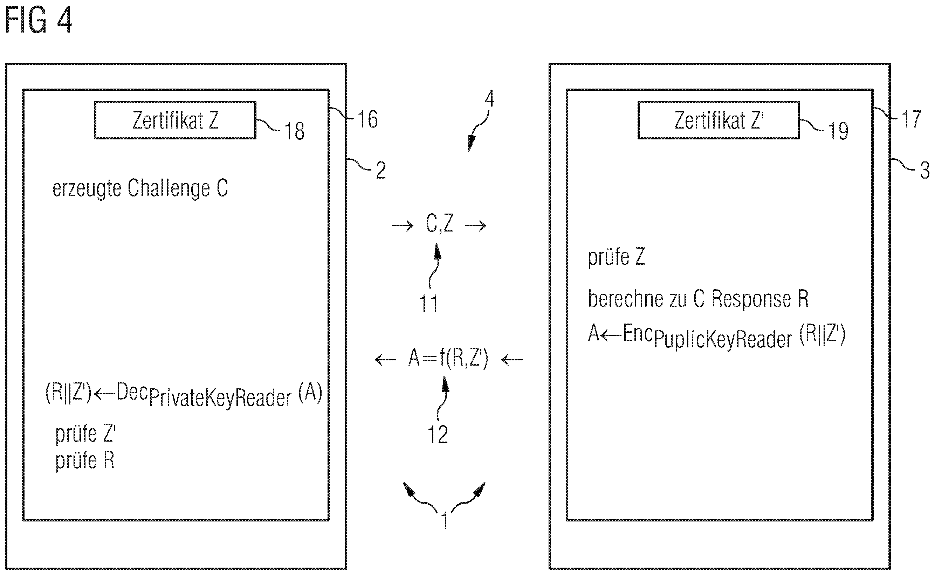

Das grundsätzliche Prinzip des erfindungsgemäßen Authentifikationsverfahrens (oder Authentifikationsprotokoll) wird nachfolgend mit Bezug auf die schematische Darstellung in Fig. 4 erläutert.

Fig. 4 zeigt lediglich schematisch die Basisstation 2 und den Transponder 3 des Kommunikationssystems 1, wobei dort lediglich die Authentifikationsmodule 16, 17 innerhalb dieser Einrichtungen 2, 3 zur Erläuterung des Authentifikationsverfahrens dargestellt sind. Es sei angenommen, dass in der basisstationsseitigen Speichereinrichtung 18 das Zertifikat Z und der basisstationsseitige geheime Schlüssel der Basisstation 2 hinterlegt sind und in der Speichereinrichtung 19 des Transponders 3 ein davon verschiedenes Zertifikat Z' sowie der transponderseitige geheime Schlüssel hinterlegt sind.

Das erfindungsgemäße Authentifikationsverfahren findet wie folgt statt:

- Zu Beginn des Authentifikationsverfahrens erzeugt das basisstationsseitige Authentifikationsmodul 16 eine Anfrage C (C = Challenge).

- Das Authentifikationsmodul 16 sendet diese Anfrage C zusammen mit dem abgespeicherten basisstationsseitigen Zertifikat Z als Anfragesignal 11 aus. Ein oder mehrere in der unmittelbaren Umgebung dieser Basisstation 2 befindliche Transponder 3 nehmen dieses Anfragesignal 11 mit dem Zertifikat Z und der Anfrage C auf, wobei dieses Anfragesignal 11 in dem jeweiligen Transponder 3 in bekannter Weise demoduliert und dekodiert wird.

- Anschließend prüft das Authentifikationsmodul 17 im Transponder 3 das so empfangene Zertifikat Z hinsichtlich seiner Gültigkeit.

- Anschließend berechnet das Authentifikationsmodul 17 die zu der Anfrage C passende Antwort R (R = Response).

- Anschließend sendet das Authentifikationsmodul 17 als Antwortsignal die Antwort R sowie das in dem Speicher 19 des Transponders 3 abgelegte Zertifikat transponderspezifische Z' zurück an die Basisstation 2. Wesentlich ist dabei, dass die von dem Transponder 3 zurück gesendeten Daten, also die Antwort R und das Zertifikat Z', durch das Authentifikationsmodul 19 vorher asymmetrisch randomisiert verschlüsselt werden und somit diese asymmetrisch randomisiert verschlüsselten Daten A = f(R, Z') an die Basisstation 2 gesendet werden. Die Verschlüsselung (Enc) erfolgt hier mittels eines öffentlichen Schlüssels (PublicKeyReader) der Basisstation 2, der z. B. in dem von der Basisstation 2 gesendeten Zertifikat Z enthalten ist.

- In der Basisstation 2 und dabei insbesondere in dem dortigen Authentifikationsmodul 16 wird das empfangene Antwortsignal 12, welches diese asymmetrisch randomisiert verschlüsselten Daten A = f(R, Z') enthält, mittels eines privaten Schlüssels (PrivateKeyReader) entschlüsselt, sodass in dem Authentifikationsmodul 16 nunmehr ebenfalls die Antwort R sowie das Zertifikat Z' vorhanden ist.

- Das Authentifikationsmodul 16 prüft das entschlüsselte Zertifikat Z' sowie die Antwort R. Bei positiver Überprüfung dieser Daten R, Z' ist der Transponder 3 gegenüber der Basisstation 2 authentifiziert, sodass im Anschluss daran die eigentliche Datenkommunikation zwischen der Basisstation 2 und dem Transponder 3 stattfinden kann.

Für die Machbarkeit dieses beidseitigen Authentifikationsprotokolls ist es wesentlich, dass die Basisstation die Anfrage C unabhängig von dem im Transponder 3 hinterlegten geheimen Schlüssel (Zertifikat Z') erzeugt. Andernfalls wäre ein zusätzlicher Kommunikationsschritt erforderlich, damit der Transponder 3 der Basisstation 2 vorher seine Identität oder seinen öffentlichen Schlüssel mitteilen kann. Dadurch wird das Authentifikationsverfahren insgesamt kürzer.

Wesentlich ist ferner, dass die Erzeugung der Anfrage C und der Antwort R sowie die entsprechenden Zertifikate Z, Z' so vorgegeben werden, dass das entsprechende Authentifikationsprotokoll auf der Basis elliptischer Kurven über dem Galois-Feld GF($2^d$) durchgeführt werden kann. Im Unterschied zu bisher bekannten, zweiseitig asymmetrischen Authentifikationsverfahren wird so ein zusätzlicher Schutz der Privatsphäre des jeweils angesprochenen Transponders 3 bereitgestellt.

Das oben, anhand der Fig. 4 beschriebene Authentifikationsprotokoll weist die folgenden Eigenschaften auf:

Authentifikation:

Der Transponder 3 authentifiziert sich gegenüber der Basisstation 2, indem er ein gültiges Zertifikat Z' zusammen mit einer gültigen Antwort R auf die von der Basisstation 2 gesendete Anfrage C an diese zurücksendet. Eine solche gültige Antwort R kann der Transponder 3 lediglich dann berechnen und zurücksenden, wenn er Kenntnis über den geheimen Schlüssel $\xi_T$ des Transponders, welcher zum öffentlichen Schlüssel $x_T$ aus dem Zertifikat Z' gehört, hat.

Privacy-Schutz des Transponders:

Lediglich eine solche Basisstation 2, welche zu dem einem Transponder 3 entsprechenden Kommunikationssystem 1 gehört, das heißt welche ein gültiges Zertifikat Z sendet und gleichzeitig zu dem öffentlichen Schlüssel $x_R$ im Zertifikat Z den passenden geheimen Schlüssel $\xi_R$ aufweist, ist hier in der Lage, die vom Transponder 3 zurückgesendeten Daten A zu entschlüsseln und damit auch zu interpretieren. Für alle anderen Basisstationen 2 sehen diese Daten des Transponders 3 zufällig aus. Auf diese Weise ist die Datensicherheit (Data-Privacy) des jeweiligen Transponders 3 gegeben.

Zusätzlich wird bei jeder Anfrage C der Basisstation 2 an den Transponder 3 ein neuer zufälliger Schlüssel K gewählt. Somit sind die von dem Transponder 3 zurückgesendeten Daten A bei jeder Anfrage der Basisstation 2, auch wenn es sich hier um wiederholt identische Anfragen handelt, verschieden. Ein unberechtigter Nutzer würde in diesem Falle jedes Mal unterschiedliche Anfragedaten und Antwortdaten erkennen und würde daher keinerlei Verbindungen zwischen diesen Anfragedaten und entsprechenden Antwortdaten, die zu verschiedenen Zeitpunkten von ein und demselben Transponder 3 an die Basisstation 2 gesendet werden, herstellen können. Dies ermöglicht einen größtmöglichen Schutz gegen das unerwünschte, so genannte Tracking (Location Privacy).

Vorwärtssicherheit:

Da beim erneuten Durchlaufen (Instanz) des Authentifikationsprotokolls der Transponder 3 den Schlüssel K erneut zufällig wählt und sein Zertifikat Z' sowie die entsprechende Antwort R, die vom geheimen transponderseitigen Schlüssel $\xi_T$ abhängig ist, damit verschlüsselt, ist ein unberechtigter Nutzer nicht in der Lage, vorher aufgezeichnete Instanzen dieses Authentifikationsprotokolls eben dem jeweiligen Transponder 3 zuzuordnen. Hierfür müsste er jeweils den Schlüssel K kennen, der aber nach jeder Instanz des Authentifikationsprotokolls vom Transponder 3 wieder verworfen wird und nicht auf dem Transponder 3 selbst abgespeichert wird. Das einzige Geheimnis, das ein unberechtigter Nutzer beispielsweise durch Aufbrechen und Analysieren des Transponders 3 in Erfahrung bringen könnte, ist der geheime Schlüssel $\xi_T$. Allerdings hat dieser geheime Schlüssel $\xi_T$ keinen Einfluss auf den Schlüssel K. Wenn der unberechtigte Benutzer den geheimen Schlüssel $\xi_T$ kennen würde, dann wäre die Authentizität des Transponders nicht mehr gegeben, sodass daher die Datenkommunikation mit der Basisstation 2 von diesem Transponder 3 aus nicht mehr weitergeführt werden könnte. Dies ist eine weitere Sicherheit des gesamten Authentifikationsverfahrens.

Insgesamt ist somit sowohl hinsichtlich der Authentifikation, als auch hinsichtlich der Vorwärtssicherheit und Datensicherheit (Privacy-Schutz) eine größtmögliche Sicherheit der Datenkommunikation bei gleichzeitig relativ geringen Mitteln möglich.

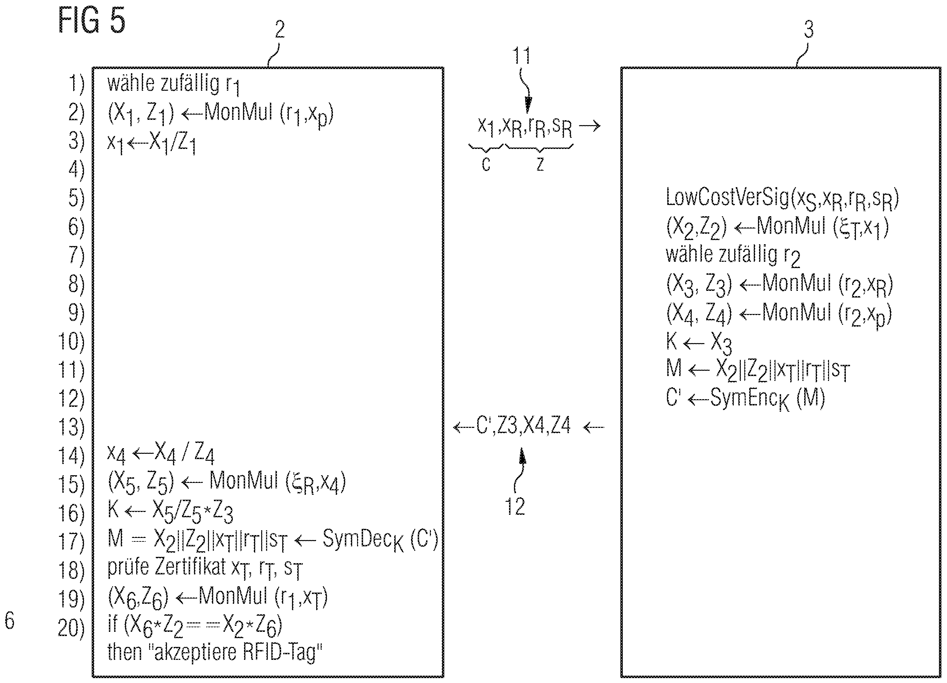

Nachfolgend wird ein Beispiel des erfindungsgemäßen Authentifikationsverfahren auf Basis elliptischer Kurven anhand des Ablaufdiagramms in Fig. 5 beschrieben.

Für die Authentifikation werden folgende Parameter für das Kommunikationssystem 1, die Basisstation 2 und den Transponder 3 vorgegeben:

Als Systemparameter, also als Parameter, die für das gesamte Kommunikationssystem 1 und damit für die gesamte Authentifikation gelten, werden folgende Parameter vorgegeben.

- Es wird eine geeignete elliptische Kurve vorgegeben;
- $x_p$ bezeichnet die affine x-Koordinate des Basispunktes P.
- $x_S$ bezeichnet einen öffentlichen Schlüssel zur Signaturverifikation.

Lediglich für die Basisstation 2 gelten die folgenden Parameter:

- $\xi_R$ bezeichnet den basisstationenseitigen geheimen Schlüssel.
- $x_R$, $r_R$, $s_R$ bezeichnen das Zertifikat Z, wobei $x_R$ den öffentlichen Schlüssel (affine x-Koordinate des Punktes $R=\xi_R*P$) und $r_R$, $s_R$ die ECGDSA-Signatur von $x_R$, verifizierbar mit dem öffentlichen Schlüssel $x_S$, bezeichnen.

Lediglich für den Transponder 3 sind folgende Parameter vorgesehen:

- $\xi_T$ bezeichnet den transponderseitigen geheimen Schlüssel.
- $x_T$,$r_T$,$s_T$ bezeichnen das Zertifikat Z', wobei $x_T$ den öffentlichen Schlüssel (affine x-Koordinate des Punktes $T=\xi_T*P$) und $r_T$,$s_T$ die Signatur von $x_T$, verifizierbar mit dem öffentlichen Schlüssel $x_S$, bezeichnen.

Das in Fig. 5 dargestellte beispielhafte Authentifikationsverfahren wird wie folgt durchgeführt:

In den Schritten 1) bis 4) des in der Fig. 5 dargestellten erfindungsgemäßen Authentifikationsprotokolls erzeugt die Basisstation die Anfrage C = $x_1$. Diese Anfrage $x_1$ stellt die x-Koordinate des Punkte $P_1 = r_1 * P$ für einen zufälligen Skalar dar. Die Basisstation 2 sendet diese Anfrage $x_1$ sowie das Zertifikat Z = $[x_R, r_R, s_R]$ der Basisstation 2 bestehend aus einem öffentlichen Schlüssel $x_R$ der Basisstation 2 und den Signaturkomponenten $r_R$, $s_R$ an den Transponder 3.

Im Schritt 5) erfolgt eine Signaturprüfung. Bei dieser Signaturprüfung überprüft der Transponder 3 die Gültigkeit des Zertifikats Z der Basisstation 2. Der Schlüssel $x_R$ wird von der Basisstation 3 als authentisch angesehen, falls das Zertifikat Z gültig ist. Die Signaturüberprüfung kann beispielsweise mit einem so genannten "Low-Cost-Signaturalgorithmus" durchgeführt werden, wie er zum Beispiel in der Deutschen Patentanmeldung DE 101 61 137 A1 beschrieben ist. Diese Druckschrift wird hinsichtlich des Verfahrens zur Signaturprüfung vollinhaltlich in die vorliegende Patentanmeldung mit einbezogen.

Bei dieser Signaturprüfung werden drei Skalarmultiplikationen $(X_A,Z_A) \leftarrow$ MonMul $(r_R,r_R)$, $(X_B,Z_B) \leftarrow$ MonMul $(s_R,x_S)$, $(X_C,Z_C) \leftarrow$ MonMul $(x_R,x_P)$ durchgeführt. Nur wenn die Gleichung

$$X^2_C (X_AZ_B+X_BZ_B)^2+X_AX_BX_CZ_AZ_BZ_C+X^2_AX^2_BX^2_C+bZ^2_AZ^2_BZ^2_C=0 \qquad (2)$$

gilt, dann wird das Zertifikat Z als gültig verifiziert. Diese Gleichung (2) kann also sehr einfach mit 11 Multiplikationen im Galois-Feld GF($2^d$) ausgewertet werden.

Für den Fall, dass das Zertifikat Z als nicht gültig angesehen wird, lehnt der Transponder 3 die das Zertifikat Z sendende Basisstation 2 als nicht authentisch und somit nicht gültig ab. In diesem Fall erfolgt keine weitere Datenkommunikation.

Im Schritt 6) erfolgt eine Antwortberechnung. Hier berechnet der Transponder 3 zur Anfrage $x_1$ die entsprechende Antwort $(X_2,Z_2)$, die die projektive x-Koordinate des Punktes $P_2=\xi_T*P_1=\xi_T*(r_1*P)$ darstellt.

Anschließend werden in den Schritten 7) bis 10) im Transponder 3 der randomisierte Schlüssel erzeugt. Der Transponder 3 erzeugt hier einen symmetrischen Schlüssel K=$X_3$, der die projektive x-Koordinate des Punktes $P_3=r_2*R=r_2*(\xi_R*P)$ darstellt. Dabei ist $r_2$ ein zufälliger Skalar. Die projektive x-Koordinate $(X_4,Z_4)$ eines Punktes $P_4$ sowie die Komponente $Z_3$ dient der Basisstation 2 zur Berechnung des symmetrischen Schlüssels K.

In den Schritten 11) und 12) verschlüsselt der Transponder 3 die Antwort $(X_2,Z_2)$ zusammen mit seinem Zertifikat Z' des Transponders 3. Das Zertifikat Z' besteht dabei aus dem öffentlichen Schlüssel $x_T$ des Transponders 3 und den Signaturkomponenten $r_T$ und $s_T$. Im Schritt 11) werden dabei zunächst die Daten $(X_2,Z_2)$ und das Zertifikat Z' hintereinander angeordnet . Im Schritt 12) erfolgt dann die eigentliche Verschlüsselung, wobei hier ein beliebiges, hier nicht näher spezifiziertes Verschlüsselungsverfahren zum Einsatz kommen kann.

Um die verschlüsselte Antwortinformation C' zu erhalten, wird zum Beispiel eine symmetrische Verschlüsselung verwendet. Die Vorrichtung zur symmetrischen Verschlüsselung kann beispielsweise auf einem linearen Schieberegister basieren, welches bereits für die $GF(2^d)$-Arithmetik im Transponder 3 integriert ist. Durch geringen zusätzlichen Hardwareaufwand kann mit diesem Schieberegister die Verschlüsselung vorgenommen werden.

Bei einer Variante der Schritte 11) und 12) berechnet der Transponder 3 den Schlüssel $K = x_3 = X_3/Z_3$ und $x_4 = X_4/Z_4$ und überträgt anstelle von $Z_3$, $X_4$, $Z_4$ nur den Wert $x_4$, wenn auf dem Transponder 3 in $GF(2^d)$ invertiert werden kann und wenn die Übertragung eines d-Bit langen Wertes länger als eine Inversion dauert.

Anschließend wird im Schritt 13) die verschlüsselte Antwortinformation C' zusammen mit den Daten $(X_4,Z_4)$, $Z_3$ an die Basisstation 2 zurückgesendet. Die Antwortinformation C' beinhalten die Nutzdaten, wohingegen die Daten $(X_4,Z_4)$, $Z_3$ Zusatzkomponenten bezeichnen, die zu der randomisierten Nachricht gehören.

In den Schritten 14) - 16) wird in der Basisstation 2 der symmetrische Schlüssel K aus den Daten $Z_3$, $X_4$, $Z_4$ berechnet. Das Wesentliche ist hierbei, dass nur die Basisstation 2, die den geheimen Schlüssel $\xi_R$ kennt, in der Lage ist, aus $Z_3$, $X_4$, $Z_4$ den jeweiligen symmetrischen Schlüssel K zu gewinnen.

Bei der oben genannten Variante berechnet die Basisstation den Schlüssel durch $K = X_5/Z_5$.

Im Schritt 17) entschlüsselt die Basisstation 2 die Antwort $(X_2,Z_2)$ und das Zertifikat $x_T$, $r_T$, $S_T$ des Transponders 3. Beispielsweise kann hier ein so genanntes El-Gamal Ver-/Entschlüsselungsverfahren zum Einsatz kommen. Dieses Verfahren ist ein so genanntes Public-Key-Verfahren, welches dazu ausgelegt ist, randomisiert zu verschlüsseln und zu entschlüsseln.

Die Basisstation 2 prüft das Zertifikat Z' des Transponders 3 im Schritt 18). Ist das Zertifikat Z' nicht gültig, dann lehnt die Basisstation 2 den Transponder 3 als nicht authentisch ab.

In einer Variante können Transponder 3 und Basisstation 2 verschiedene Signaturverfahren bzw. verschiedene öffentliche Schlüssel für ihre jeweiligen Zertifikate besitzen.

In den Schritten 19) - 20) überprüft die Basisstation 2 die Antwort des Transponders 3. Die Basisstation 2 berechnet die projektive x-Koordinate $(X_6,Z_6)$ des Punkts $P_6 = r_1 * T = r_1 * (\xi_T * P)$ und prüft dabei, ob $(X_2,Z_2)$ sowie $(X_6,Z_6)$ projektive Koordinaten des gleichen Punktes sein können. Dies ist genau dann der Fall, wenn $X_6 Z_2 = X_2 Z_6$ gilt. Ist die Antwort richtig, dann ist der Transponder 3 authentisch. Ist die Antwort falsch, dann lehnt die Basisstation 2 den Transponder 3 als nicht authentisch ab.

Das bevorzugte Protokoll erlaubt eine sehr einfache und nichtsdestotrotz sehr sichere Authentifikation, einen größtmöglichen Privacy-Schutz (Data und Location Privacy) und bietet zudem eine größtmögliche Vorwärtssicherheit.

Das erfindungsgemäße Verfahren zur sicheren Authentifizierung eines Transponders gegenüber einer Basisstation mit zusätzlichem Privacy-Schutz für den Transponder basiert auf Public-Key-Kryptographie und besitzt dadurch den entscheidenden Vorteil gegenüber bisherigen symmetrischen Lösungen, dass auf Seiten der Basisstation keine gesicherte Anbindung an eine zentrale Back-End-Datenbank existieren muss, um dort einen Schlüssel für einen Transponder zu suchen. Somit muss keine Basisstation einen systemweit einheitlichen geheimen Schlüssel besitzen. Würde man bei der bekannten symmetrischen Lösung eine Basisstation "kompromittieren" und könnte man an deren Masterschlüssel gelangen, so wäre das gesamte System gebrochen und man könnte selbst "gültige" Transponder produzieren. Dies kann erfindungsgemäß nicht vorkommen. Im Falle der Public-Key-Lösung besitzt keine Basisstation einen Schlüssel, den ein unberechtigter Nutzer nutzen könnte, um "gültige" Transponder zu erstellen.

Ein weiterer wichtiger Vorteil bei der asymmetrischen Variante besteht darin, dass man sehr einfach verschiedene Zugriffsrechte auf die Transponder von verschiedenen berechtigten Basisstationen in den Zertifikaten kodieren kann, d. h. in dem Zertifikat ist dann enthalten, ob eine Basisstation beispielsweise nur Leserechte oder auch Schreibrechte auf den Transponder besitzt.

Als eine Variante könnte man im Falle, dass alle Basisstationen gleichberechtigt sind, jede Basisstation mit dem gleichen geheimen Schlüssel versehen und entsprechend die Transponder mit dem dazugehörenden öffentlichen Schlüssel, was den Vorteil hätte, dass keine Zertifikatsprüfung eines Leser-Zertifikats auf den Transponder erforderlich wäre. Dadurch würde sich der Rechenaufwand, den der Transponder bewältigen muss, ungefähr halbieren.

Obgleich die vorliegende Erfindung vorstehend anhand eines bevorzugten Ausführungsbeispiels beschrieben wurde, ist sie darauf nicht beschränkt, sondern lässt sich auf mannigfaltige Art und Weise modifizieren.

So sei die Erfindung insbesondere nicht ausschließlich auf RFID-Systeme beschränkt, sondern lässt sich auch beispielsweise auf die Einzelteilerkennung (Item-Identification) erweitern. Häufig müssen solche Teile nicht eindeutig erkannt werden. Hier reicht es auch häufig aus, dass das Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines Sensors. Die Erfindung betrifft also auch ausdrücklich solche Sensoren, bei denen eine Kommunikation zum Auslesen und Beschreiben von Daten eines Datenträgers beziehungsweise Sensors vorgenommen werden.

Auch soll sich die Erfindung auch auf beliebige Datenkommunikationssysteme beziehen, die nicht notwendigerweise RFID-Systeme sind und die auch nicht notwendigerweise drahtlos ausgebildet sind.

In den Fig. 3 und 4 wurde der besseren Übersichtlichkeit halber der Aufbau des RFID-Systems und insbesondere des Transponders und der Basisstation bewusst stark vereinfacht dargestellt. Es versteht sich von selbst, dass die Basisstation und der entsprechende Transponder die für eine Datenkommunikation zwischen Basisstation und Transponder erforderlichen Funktionseinheiten, wie Demodulator, Modulator, Energieversorgung, Synchronisationseinrichtung, Dekodierer und dergleichen, ebenfalls enthalten.

In den Fig. 3 und 4 wurde jeweils zwischen der Steuereinrichtung, Auswerteeinrichtung und Authentifikationsmodul unterschieden. Es versteht sich von selbst, dass diese Einrichtungen z.B. Bestandteil der Steuereinrichtung sein können oder auch getrennt davon ausgebildet sein können. Ebenfalls sei darauf hingewiesen, dass sowohl die Basisstation als auch der Transponder eine einzige Sende-/Empfangseinrichtung und eine zugehörige Sende-/Empfangsantenne aufweisen können. Denkbar wäre selbstverständlich auch, dass die Basisstation und/oder der Transponder getrennte Sende/Empfangseinrichtungen und insbesondere eine Sendeantenne und eine davon getrennte Empfangsantenne aufweisen können.

Das vorstehend beschriebene Datenkommunikationssystem und Datenkommunikationsverfahren wurden anhand des Prinzips "Reader-talks-first"-Prinzip beschrieben. Denkbar wäre natürlich auch das Prinzip "Tag-talks-first", bei dem die Basisstation zunächst auf eine Anfrage eines Transponders wartet. Allerdings weist dieses zweit genannte Prinzip eine schlechtere Reaktionszeit auf, so dass vor allem bei modernen so genannten "long-range" Datenkommunikationssystemen, wie sie zum Beispiel bei RFID eingesetzt werden, vorzugsweise das "Reader-talks-first"-Prinzip eingesetzt wird.

Es versteht sich von selbst, dass das anhand von Fig. 5 beschriebene erfindungsgemäße Authentifikationsverfahren lediglich beispielhaft zu verstehen ist. Selbstverständlich ließen sich dort die einzelnen Verfahrensschritte und angewendeten mathematischen Operationen auch im Rahmen der Erfindung abwandeln und modifizieren, beispielsweise durch funktionsgleiche oder alternative Verfahrensschritte.

Literaturverzeichnis

[1] Daniel Engels, Ronald Rivest, Sanjay Sarma, Stephen Weis, "Security and privacy aspects of low-cost radio frequency identification systems", International Conference on Security in Pervasive Computing, März 2003.

[2] Daniel Engels, Sanjay Sarma, Stephen Weis, "RFID systems and security and privacy implications", Cryptographic Hardware and Embedded Systems - CHES, August 2003.

[3] Martin Feldhofer, Sandra Dominikus, Johannes Wolkerstorfer, "Strong Authentication for RFID Systems Using the AES Algorithm", Workshop on Cryptographic Hardware Embedded Systems -CHES, August 2004.

[4] Miyako Ohkubo, Koutarou Suzuki, Shingo Kinoshita, "Cryptographic Approach to Privacy-Friendly Tags", RFID Privacy Workshop, November 2003.

Konkordanzliste der verwendeten Bezeichnungen:

| In den Patentansprüchen | In der Beschreibung |
| --- | --- |
| x_P | $x_P$ |
| x_S | $X_S$ |
| xsi_R | $\xi_R$ |
| xsi_T | $\xi_T$ |
| x_R | $X_R$ |
| x_T | $x_T$ |
| r_R | $r_R$ |
| s_R | $s_R$ |
| r_T | $r_T$ |
| s_T | $S_T$ |
| x_1 | $x_1$ |

(fortgesetzt)

| In den Patentansprüchen | In der Beschreibung |
| --- | --- |
| $P\_1$ | $P_1$ |
| $r\_1$ | $r_1$ |
| $X\_2$ | $X_2$ |
| $Z\_2$ | $Z_2$ |
| $P\_2$ | $P_2$ |
| $X\_3$ | $X_3$ |
| $P\_3$ | $P_3$ |
| $r\_2$ | $r_2$ |
| $P\_4$ | $P_4$ |
| $X\_4$ | $X_4$ |
| $Z\_4$ | $Z_4$ |
| $X\_5$ | $X_5$ |
| $Z\_5$ | $Z_5$ |
| $x\_4$ | $X_4$ |
| $X\_6$ | $X_6$ |
| $Z\_6$ | $Z_6$ |

## Patentansprüche

1. Authentifizierungsverfahren zwischen Teilnehmern (2, 3) eines Kommunikationssystems (1) unter Verwendung eines asymmetrischen Verschlüsselungsalgorithmus auf Basis elliptischer Kurven, wobei im Kommunikationssystem (1) für die Authentifizierung als Parameter eine geeignete elliptische Kurve, eine affine x-Koordinate, $x\_P$, eines Basispunkts, P, und ein öffentlicher Schlüssel, $x\_S$, zur Signaturverifikation vorgegeben sind, wobei der Verschlüsselungsalgorithmus auf der Basis von Skalarmultiplikationen auf der elliptischen Kurve implementiert ist, wobei der erste Teilnehmer (2) eine Basisstation (2) und der zweite Teilnehmer (3) ein Transponder (3), insbesondere ein passiver oder semipassiver Transponder (3), ist,
mit den Schritten:

(a) Bereitstellen eines ersten und zumindest eines zweiten Teilnehmers (2, 3), die einen ersten bzw. zweiten, nur dem jeweiligen Teilnehmer (2, 3) bekannten, geheimen Schlüssel, $xsi\_R$; $xsi\_T$ mit jeweils einem zugeordneten öffentlichen Schlüssel, $x\_R$, $x\_T$ aufweisen,

a1) wobei der erste Teilnehmer (2) zusätzlich zu dem geheimen Schlüssel, $xsi\ R$, ein erstes Zertifikat (Z) mit dem öffentlichen Schlüssel, $x\_R$, als affine x-Koordinate des Punkts $R=xsi\_R*P$ und einer Signatur $r\_R$, $s\_R$ von $x\_R$, verifizierbar mit dem öffentlichen Schlüssel, $x\_S$, aufweist; und wobei
a2) der zweite Teilnehmer (3) zusätzlich zu dem geheimen Schlüssel, $xsi\_T$, ein zweites Zertifikat (Z') mit dem öffentlichen Schlüssel, $x\ T$, als affine x-Koordinate des Punkts $T=xsi\_T*P$ und einer Signatur $r\_T$, $s\_T$ von $x\_T$, verifizierbar mit dem öffentlichen Schlüssel, $x\_S$, aufweist; und
a3) wobei ein Authentifikationsmodul (16) des ersten Teilnehmers (2) eine Anfrage $C=x\_1$ zusammen mit dem ersten Zertifikat (Z) des ersten Teilnehmers (2) als Anfragesignal (11) aussendet, und wobei die Anfrage $x\_1$ die affine x-Koordinate eines ersten Punkts $P\_1=r\_1*P=r\_1*x\_P$ einer Multiplikation eines zufälligen Skalars $r\_1$ und der affinen Koordinate $x\_P$ des Basispunkts ist;

(b) Empfangen des Anfragesignals (11) am zweiten Teilnehmer (3) und Authentifizieren des mit der Anfrage C gesendeten ersten Zertifikats Z und dessen öffentlichen Schlüssels, $x\_R$, hinsichtlich seiner Gültigkeit mittels einer Signaturprüfung;
(c) Berechnen, am zweiten Teilnehmer (3), der zu der Anfrage $C=x\_1$ gehörenden Antwort R, $X\_2$, $Z\_2$, des zweiten Teilnehmers (3), die die projektierte Koordinate eines zweiten Punkts $P\_2=xsi\_T*P\_1=xsi\_T*(r\_1*P)$

darstellt;

(d) asymmetrisches randomisiertes Verschlüsseln der berechneten Antwort (R) und des dem zweiten Teilnehmer (3) zugehörigen zweiten Zertifikats (Z') unter Verwendung des öffentlichen Schlüssels, x R, der in dem von dem ersten Teilnehmer (2) gesendeten ersten Zertifikat (Z) enthalten ist,

d1) wobei der zweite Teilnehmer (3) die asymmetrisch randomisierten verschlüsselte Antwort R und das zweite Zertifikat Z' als Antwortsignal (12) an den ersten Teilnehmer (2) überträgt und

d2) wobei das randomisierte Verschlüsseln das zufällige Erzeugen eines symmetrischen Schlüssels $K=X\_3$, der die projektierte x-Koordinate eines dritten Punkts $P\_3=r\_2*x\_R$ darstellt, wobei $r\_2$ ein zufälliger Skalar ist, umfasst; wobei

d4) ein vierter Punkt $P4=r\_2*x\_P$ mit Koordinaten $X\_4, Z\_4$ durch Skalarmultiplikation erzeugt wird; und

d5) die Antwort $X\_2, Z\_2$ und das Zertifikat Z' hintereinander angeordnet werden und diese Anordnung mit dem symmetrischen Schlüssel $K=X\_3$ zu einer verschlüsselten Antwortinformation C' randomisiert verschlüsselt wird; und

d6) die verschlüsselte Antwortinformation C' zusammen mit der erzeugten z-Koordinate $Z\_3$ des dritten Punkts und den Koordinaten des vierten Punkts $X\_4, Z\_4$ oder zusammen nur mit der affinen x-Koordinate des vierten Punkts als das Antwortsignal (12) an den ersten Teilnehmer (2) übertragen wird;

(e) Entschlüsseln, am ersten Teilnehmer (2), mit Hilfe des geheimen Schlüssels xsi_R, des Antwortsignals (11), so dass am ersten Teilnehmer (2) die Antwort $R=X\_2, Z\_2$ und das zweite Zertifikat $Z'=x\_T, r\_T, s\_T$ vorhanden ist, und Authentifizieren der von dem zweiten Teilnehmer (3) gesendeten Antwort $R=X\_2, Z\_2$ und des zweiten Zertifikats Z' hinsichtlich dessen Gültigkeit, umfassend die Schritte

e1) Erzeugen eines fünften Punkts $X\_5, Z\_5$ aus einer Skalarmultiplikation des geheimen Schlüssels xsi_R und der affinen x-Koordinate $x\_4$ des vierten Punkts $X\_4, Z\_4$,

e2) Bestimmen des symmetrischen Schlüssels K als die Mulitplikation der affinen x_Koordinate des fünften Punkts $X\_5, Z\_5$ mit der übertragenen z-Koordinate $Z\_3$ des dritten Punkts,

e3) Entschlüsseln der Antwortinformation C' mit dem bestimmten symmetrischen Schlüssel K,

e4) Berechnen der projektierten x-Koordinate $X\_6, Z\_6$ eines sechsten Punkts $P\_6=r\_1*x\_T=r\_1*(xsi\_T*P)$, und

e5) Prüfen ob der zweite Punkt $X 2, Z\_2$ und der sechste Punkt $X\_6, Z\_6$ projektierte Koordinaten des gleichen Punkts sind, was genau dann gilt, wenn $X\_6Z\_2=X\_2Z\_6$ gilt, wobei dann der Transponder als authentisch identifiziert wird; wobei

(f) das Erzeugen der Anfrage (C) und der Antwort (R) sowie die entsprechenden ersten und zweiten Zertifikate (Z, Z') so vorgegeben werden, dass das entsprechende Authentifizierungsprotokoll auf der Basis elliptischer Kurven durchgeführt wird.

**2.** Verfahren nach Anspruch 1,
**dadurch gekennzeichnet,**
**dass** die Anfrage des ersten Teilnehmers (2) unabhängig von dem zweiten Zertifikat des zweiten Teilnehmers (3) ist.

**3.** Verfahren nach einem der vorhergehenden Ansprüche, **dadurch gekennzeichnet,**
**dass** im Schritt (d) die berechnete Antwort und das zweite Zertifikat vor dem randomisierten Verschlüsseln durch Verkettung hintereinander angeordnet werden.

**4.** Verfahren nach Anspruch 1,
**dadurch gekennzeichnet,**
**dass** im Schritt (e) der erste Teilnehmer (2) die berechnete Antwort und das zweite Zertifikat des zweiten Teilnehmers (3) unter Verwendung des berechneten symmetrischen Schlüssels entschlüsselt.

**5.** Verfahren nach einem der Ansprüche 1 oder 4,
**dadurch gekennzeichnet,**
**dass** im Schritt (e) das zweite Zertifikat des zweiten Teilnehmers (3) und die berechnete Antwort hinsichtlich deren Authentizität überprüft werden.

**6.** Verfahren nach Anspruch 1,
**dadurch gekennzeichnet,**

**dass** die Durchführung der Skalarmultiplikationen durch einen Montgomery-Algorithmus implementiert ist.

7. Verfahren nach Anspruch 6,
**dadurch gekennzeichnet,**
**dass** die Skalarmultiplikationen mittels eines Schieberegisters, welches taktweise Multiplikations- und/oder Additionsschritte durchführt, ausgeführt werden.

8. Kommunikationssystem (1) zur zweiseitigen Authentifikation unter Verwendung eines asymmetrischen Verschlüsselungsalgorithmus auf Basis elliptischer Kurven mittels eines Authentifikationsverfahrens nach einem oder mehreren der vorherigen Ansprüche 1-7.

9. System nach Anspruch 8,
**dadurch gekennzeichnet,**
**dass** ein erster Teilnehmer (2) und zumindest ein zweiter Teilnehmer (3) vorgesehen sind, die in datenkommunikativer Verbindung (4) zueinander stehen, wobei der erste und zweite Teilnehmer (2, 3) für die zweiseitige Authentifikation jeweils ein Authentifikationsmodul (16, 18) aufweisen.

10. System nach Anspruch 9,
**dadurch gekennzeichnet,**
**dass** das Authentifikationsmodul (16, 17) eines jeweiligen Teilnehmers (2, 3) eine Recheneinrichtung aufweist, die für Berechnungen, Prüfungen und Authentifikationen innerhalb des jeweiligen Authentifikationsmoduls (16, 17) vorgesehen sind.

11. System nach einem der Ansprüche 9 oder 10,
**dadurch gekennzeichnet,**
**dass** das Authentifikationsmodul (17, 18) eines jeweiligen Teilnehmers (2, 3) eine Ver-/Entschlüsselungseinrichtung aufweist, die für eine jeweilige Verschlüsselung und/oder Entschlüsselung vorgesehen ist.

12. System nach einem der vorhergehenden systembezogenen Ansprüche,
**dadurch gekennzeichnet,**
**dass** jeder Teilnehmer (2, 3) einen Speicher (18, 19) aufweist, in dem die Systemparameter sowie die jeweils diesem Teilnehmer (2, 3) zugehörigen Parameter abgelegt sind.

13. System nach einem der vorhergehenden systembezogenen Ansprüche,
**dadurch gekennzeichnet,**
**dass** die ersten und zweiten Teilnehmer (2, 3) Kommunikationsteilnehmer des Kommunikationssystems (1), insbesondere eines als RFID-Systems ausgebildeten Kommunikationssystems (1), sind.

**Claims**

1. Method for authentication between participants (2, 3) in a communication system (1) making use of an asymmetric encryption algorithm based on elliptical curves, wherein a suitable elliptical curve, an affine x-coordinate, x_P, of a base point, P, and a public key, x_S, for signature verification are specified as parameters for the authentication in the communication system (1), wherein the encryption algorithm is implemented on the basis of scalar multiplication on the elliptical curve, wherein the first participant (2) is a base station (2) and the second participant (3) is a transponder (3), in particular a passive or semi-passive transponder (3),
with the steps:

(a) Provision of a first and at least one second participant (2, 3), which have respectively a first and a second secret key, xsi_R; xsi_T, known only to the participant (2, 3) concerned, with one public key, x_R, x_T, assigned in each case

a1) wherein the first participant (2), in addition to the secret key, xsi_R, has a first certificate (Z) with the public key, x_R, as affine x-coordinate of the point R=xsi_R*P and a signature r_R, s_R of x_R, verifiable using the public key, x_S; and wherein
a2) the second participant (3), in addition to the secret key, xsi_T, has a second certificate (Z') with the public key, x_T, as affine x-coordinate of the point T=xsi_T*P and a signature r_T, s_T of x_T, verifiable using the public key, x_S; and

a3) wherein an authentication module (16) of the first participant (2) transmits an inquiry C=x_1 together with the first certificate (Z) of the first participant (2) as an inquiry signal (11), and wherein the inquiry x_1 is the affine x-coordinate of a first point $P\_1=r\_1*P=r\_1*x\_P$ of a multiplication of a random scalar r_1 and the affine coordinate x_P of the base point;

(b) receiving the inquiry signal (11) at the second participant (3) and authentication of the first certificate Z transmitted with the inquiry C and the public key, x_R, thereof with respect to its validity by means of a signature checking;

(c) calculating at the second participant (3) the reply R, X_2, Z_2, appropriate for the inquiry C=x_1, of the second participant (3), which represents the projected coordinate of a second point $P\_2=xsi\_T*P=xsi\_T*(r\_1*P)$;

(d) asymmetric randomised encryption of the calculated reply (R) and the second certificate (Z') appropriate for the second participant (3) using the public key, x_R, which is contained in the first certificate (Z) transmitted by the first participant (2),

d1) wherein the second participant (3) transfers the asymmetrically randomised reply R and the second certificate Z' to the first participant (2) as a reply signal (12) and

d2) wherein the randomised encryption comprises the random generation of a symmetrical key K=X_3, which represents the projected x-coordinate of a third point $P\_3=r\_2*x\_R$, wherein r_2 is a random scalar; wherein

d4) a fourth point $P4=r\_2*x\_P$ with the coordinates X_4, Z_4 is generated by scalar multiplication; and

d5) the reply X_2, Z_2 and the certificate Z' are arranged one after the other and this arrangement is encrypted in a randomised manner using the symmetrical key K=X_3 to form encrypted reply information C'; and

d6) the encrypted reply information C' together with the generated z-coordinate Z_3 of the third point and the coordinates of the fourth point X_4, Z_4 or together with only the affine x-coordinate of the fourth point as the reply signal (12) is transferred to the first participant (2) ;

(e) decrypting the reply signal (11) at the first participant (2) with the aid of the secret key xsi_R, so that at the first participant (2) the reply R=X_2, Z_2 and the second certificate Z'=x_T, r_T, s_T are present, and authenticating the reply R=X_2, Z_2 transmitted by the second participant (3) and the second certificate Z' with regard to its validity, comprising the steps

e1) generating a fifth point X_5, Z_5 from a scalar multiplication of the secret key xsi_R and the affine x-coordinate x_4 of the fourth point X_4, Z_4,

e2) determining the symmetrical key K as the multiplication of the affine x-coordinate of the fifth point X_5, Z_5 with the transferred z-coordinate Z_3 of the third point,

e3) decrypting the reply information C' with the determined symmetrical key K,

e4) calculating the projected x-coordinate X_6, Z_6 of a sixth point $P\_6=r\_1*x\_T=r\_1*(xsi\_T*P)$, and

e5) checking whether the second point X_2, Z_2 and the sixth point X_6, Z_6 are projected coordinates of the same point, which then applies when X_6Z_2=X_2Z_6, wherein the transponder is then identified as authentic; wherein

(f) the generation of the inquiry (C) and the reply (R) as well as the corresponding first and second certificates (Z, Z') are predefined such that the corresponding authentication protocol is performed on the basis of elliptical curves.

2. Method according to claim 1,
   **characterised in that**
   the inquiry from the first participant (2) is independent of the second certificate for the second participant (3).

3. Method according to one of the preceding claims, **characterised in that**
   in step (d), before the random encryption, the calculated reply and the second certificate are arranged one after the other by concatenation.

4. Method according to claim 1,
   **characterised in that**
   in step (e) the first participant (2) decrypts the calculated reply and the second certificate for the second participant (3), using the calculated symmetrical key.

5. Method according to one of claims 1 or 4,
   **characterised in that**
   in step (e), the second certificate for the second participant (3) and the calculated reply are checked in respect of their authenticity.

6. Method according to claim 1,
   **characterised in that**
   the performance of the scalar multiplications is implemented by a Montgomery algorithm.

7. Method according to claim 6,
   **characterised in that**
   the scalar multiplications are executed using a shift register which performs multiplication and/or addition steps cyclically.

8. Communication system (1) for mutual authentication, using an asymmetric encryption algorithm based on elliptical curves, by means of a method of authentication according to one or more of the preceding claims 1-7.

9. System according to claim 8,
   **characterised in that**
   a first participant (2) and at least one second participant (3) are provided, these having a data communication link (4) with each other, where each of the first and the second participants (2, 3) has an authentication module (16, 18) for the mutual authentication.

10. System according to claim 9,
    **characterised in that**
    the authentication module (16, 17) of the participant (2, 3) concerned has a computational device, which is provided within the authentication module (16, 17) concerned for calculations, checks and authentications.

11. System according to one of claims 9 or 10,
    **characterised in that**
    the authentication module (17, 18) of the participant (2, 3) concerned has an encryption/decryption device which is provided for a relevant encryption and/or decryption.

12. System according to one of the preceding system-related claims,
    **characterised in that**
    each participant (2, 3) has a store (18, 19) in which are held the system parameters together with the parameters associated with the participant (2, 3) concerned.

13. System according to one of the preceding system-related claims,
    **characterised in that**
    the first and the second participants (2, 3) are communication participants of the communication system (1), in particular of a communication system (1) in the form of an RFID system.

**Revendications**

1. Procédé d'authentification entre des usagers (2, 3) d'un système de communication (1) moyennant l'utilisation d'un algorithme de cryptage asymétrique sur la base de courbes elliptiques, dans le système de communication (1) étant spécifiés, pour l'authentification, en tant que paramètres, une courbe elliptique appropriée, une coordonnée x affine, x_P, un point de base, P, et une clé publique, x_S, pour la vérification de signature, l'algorithme de cryptage étant implémenté sur la base de multiplications scalaires sur la courbe elliptique, le premier usager (2) étant une station de base (2) et le deuxième usager (3), un transpondeur (3), et plus particulièrement un transpondeur passif ou semi-passif (3),
   comportant les étapes suivantes :

   (a) mise à disposition d'un premier et au moins d'un deuxième usager (2, 3) qui comportent une première resp.

une deuxième clé secrète, xsi_R ; xsi_T connue uniquement de l'usager respectif (2, 3), avec respectivement une clé publique associée, x_R, x_T ;

a1) le premier usager (2) présentant, en plus de la clé secrète, xsi_R, un premier certificat (Z) avec la clé publique, x_R, en tant que coordonnée x affine du point R=xsi_R*P et d'une signature r_R, s_R de x_R, vérifiable au moyen de la clé publique, x_S ; et

a2) le deuxième usager (3) présentant, en plus de la clé secrète, xsi_T, un deuxième certificat (Z') avec la clé publique, x_T, en tant que coordonnée x affine du point T=xsi_T*P et d'une signature r_T, s_T de x_T, vérifiable au moyen de la clé publique, x_S ;

et

a3) un module d'authentification (16) du premier usager (2) émettant une requête C=x_l ensemble avec le premier certificat (Z) du premier usager (2) en tant que signal de requête (11) et la requête x_1 étant la coordonnée x affine d'un premier point P_1=r_1*P=r_1*x_P d'une multiplication d'un scalaire aléatoire r_1 et de la coordonnée affine x_P du point de base ;

(b) réception du signal de requête (11) au niveau du deuxième usager (3) et authentification du premier certificat Z envoyé avec la requête C et de sa clé publique, x_R, quant à sa validité au moyen d'un contrôle de signature ;

(c) calcul, au niveau du deuxième usager (3), de la réponse R, X_2, Z_2 du deuxième usager (3) à la requête C=x_1, laquelle réponse représente la coordonnée projetée d'un deuxième point P_2=xsi_T*P_1=xsi_T*(r_1*P) ;

(d) cryptage randomisé asymétrique de la réponse calculée (R) et du deuxième certificat (Z') associé au deuxième usager (3) moyennant l'utilisation de la clé publique, x_R, qui est contenue dans le premier certificat (Z) envoyé par le premier usager (2) ;

dl) le deuxième usager (3) transmettant la réponse cryptée randomisée asymétriquement R et le deuxième certificat Z' en tant que signal de réponse (12) au premier usager (2) et

d2) le cryptage randomisé comprenant la génération aléatoire d'une clé symétrique K=X_3, qui représente la coordonnée x projetée d'un troisième point P_3=r_2*x_R, r_2 étant un scalaire aléatoire ;

d4) un quatrième point P4=r_2*x_P avec les coordonnées X_4, Z_4 étant généré par multiplication scalaire ;

et

d5) la réponse X_2, Z_2 et le certificat Z' étant agencés l'un à la suite de l'autre et cet agencement étant crypté de manière randomisée avec la clé symétrique K=X_3 pour donner une information de réponse cryptée C' ;

et

d6) l'information de réponse cryptée C' étant transmise ensemble avec la coordonnée z générée Z_3 du troisième point et les coordonnées du quatrième point X_4, Z_4 ou ensemble avec uniquement la coordonnée x affine du quatrième point en tant que signal de réponse (12) au premier usager (2) ;

(e) décryptage, au niveau du premier usager (2), à l'aide de la clé secrète xsi_R, du signal de réponse (11), de sorte que la réponse R=X_2, Z_2 et le deuxième certificat Z'=x_T, r_T, s_T sont présents au niveau du premier usager (2), et authentification de la réponse R=X_2, Z_2 envoyée par le deuxième usager (3) et du deuxième certificat Z' quant à sa validité, comprenant les étapes :

el) génération d'un cinquième point X_5, Z_5 à partir d'une multiplication scalaire de la clé secrète xsi_R et de la coordonnée x affine x_4 du quatrième point X_4, Z_4,

e2) détermination de la clé symétrique K en tant que multiplication de la coordonnée x affine du cinquième point X_5, Z_5 par la coordonnée z transmise Z_3 du troisième point ;

e3) décryptage de l'information de réponse C' avec la clé symétrique déterminée K ;

e4) calcul de la coordonnée x projetée X_6, Z_6 d'un sixième point P_6=r_1*x_T=r_1*(xsi_T*P) ; et

e5) vérification si le deuxième point X_2, Z_2 et le sixième point X_6, Z_6 sont des coordonnées projetées du même point, ce qui est exactement valable si X_6Z_2=X_2Z_6, le transpondeur étant alors identifié comme étant authentique ;

(f) la génération de la requête (C) et de la réponse (R) ainsi que les premier et deuxième certificats correspondants (Z, Z') étant spécifiés de telle sorte que le protocole d'authentification correspondant est exécuté sur la base de courbes elliptiques.

2. Procédé selon la revendication 1, **caractérisé en ce que** la requête du premier usager (2) est indépendante du deuxième certificat du deuxième usager (3).

**3.** Procédé selon l'une des revendications précédentes, **caractérisé en ce que**, à l'étape (d), la réponse calculée et le deuxième certificat sont agencés l'un à la suite de l'autre par concaténation avant le cryptage randomisé.

**4.** Procédé selon la revendication 1, **caractérisé en ce que**, à l'étape (e), le premier usager (2) décrypte la réponse calculée et le deuxième certificat du deuxième usager (3) moyennant l'utilisation de la clé symétrique calculée.

**5.** Procédé selon l'une des revendications 1 ou 4, **caractérisé en ce que**, à l'étape (e), le deuxième certificat du deuxième usager (3) et la réponse calculée sont vérifiés quant à leur authenticité.

**6.** Procédé selon la revendication 1, **caractérisé en ce que** l'exécution de la multiplication scalaire est implémentée par un algorithme de Montgomery.

**7.** Procédé selon la revendication 6, **caractérisé en ce que** les multiplications scalaires sont exécutées au moyen d'un registre à décalage qui exécute des étapes de multiplication et/ou d'addition de manière cadencée.

**8.** Système de communication (1) pour authentification bilatérale moyennant l'utilisation d'un algorithme de cryptage asymétrique sur la base de courbes elliptiques au moyen d'un procédé d'authentification selon une ou plusieurs des revendications précédentes 1 à 7.

**9.** Système selon la revendication 8, **caractérisé en ce que** sont prévus un premier usager (2) et au moins un deuxième usager (3) qui sont en liaison (4) de communication de données entre eux, les premier et deuxième usagers (2, 3) comportant chacun, pour l'authentification bilatérale, un module d'authentification (16, 18).

**10.** Système selon la revendication 9, **caractérisé en ce que** le module d'authentification (16, 17) d'un usager respectif (2, 3) comporte un dispositif de calcul qui est prévu pour des calculs, contrôles et authentifications dans le module d'authentification respectif (16, 17).

**11.** Système selon l'une des revendications 9 ou 10, **caractérisé en ce que** le module d'authentification (17, 18) d'un usager respectif (2, 3) comporte un dispositif de cryptage / décryptage qui est prévu pour un cryptage et/ou décryptage respectif.

**12.** Système selon l'une des revendications précédentes relatives au système, **caractérisé en ce que** chaque usager (2, 3) comporte une mémoire (18, 19) dans laquelle sont déposés les paramètres système ainsi que les paramètres associés respectivement à cet usager (2, 3).

**13.** Système selon l'une des revendications précédentes relatives au système, **caractérisé en ce que** les premier et deuxième usagers (2, 3) sont des usagers de communication du système de communication (1), et plus particulièrement d'un système de communication (1) réalisé en tant que système RFID.

## FIG 1A

$$y^2 = x^3 - 6x + 9$$

## FIG 1B

$$y^2 = x^3 - 6x + 3$$

FIG 2

FIG 3

# FIG 4

Zertifikat Z — 18
16
2

erzeugte Challenge C

→ C,Z →

11

← A=f(R,Z') ←

12

$(R\|Z') \leftarrow \mathrm{Dec}_{\mathrm{PrivateKeyReader}}(A)$

prüfe Z'
prüfe R

4

Zertifikat Z' — 19
17
3

prüfe Z

berechne zu C Response R

$A \leftarrow \mathrm{Enc}_{\mathrm{PuplicKeyReader}}(R\|Z')$

EP 2 070 255 B1

## FIG 5

**Block 2:**

1) wähle zufällig $r_1$
2) $(X_1, Z_1) \leftarrow \text{MonMul}(r_1, x_p)$
3) $x_1 \leftarrow X_1 / Z_1$
4)
5)
6)
7)
8)
9)
10)
11)
12)
13)
14) $x_4 \leftarrow X_4 / Z_4$
15) $(X_5, Z_5) \leftarrow \text{MonMul}(\xi_R, x_4)$
16) $K \leftarrow X_5 / Z_5 * Z_3$
17) $M = X_2 \| Z_2 \| x_T \| r_T \| s_T \leftarrow \text{SymDec}_K(C')$
18) prüfe Zertifikat $x_T$, $r_T$, $s_T$
19) $(X_6, Z_6) \leftarrow \text{MonMul}(r_1, x_T)$
20) if $(X_6 * Z_2 == X_2 * Z_6)$
    then "akzeptiere RFID-Tag"

**Block 11 (arrow, C ‖ Z):**

$x_1, x_R, r_R, s_R \rightarrow$

$\underbrace{x_1}_{C} \underbrace{x_R, r_R, s_R}_{Z}$

**Block 3:**

$\text{LowCostVerSig}(x_S, x_R, r_R, s_R)$
$(X_2, Z_2) \leftarrow \text{MonMul}(\xi_T, x_1)$
wähle zufällig $r_2$
$(X_3, Z_3) \leftarrow \text{MonMul}(r_2, x_R)$
$(X_4, Z_4) \leftarrow \text{MonMul}(r_2, x_p)$
$K \leftarrow X_3$
$M \leftarrow X_2 \| Z_2 \| x_T \| r_T \| s_T$
$C' \leftarrow \text{SymEnc}_K(M)$

**Block 12 (arrow):**

$\leftarrow C', Z3, X4, Z4 \leftarrow$

EP 2 070 255 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10161138 A1
- WO 9637064 A
- DE 10161137 A1


**In der Beschreibung aufgeführte Nicht-Patentliteratur**

- **KLAUS FINKENZELLER.** RFID-Handbuch. Hansa-Verlag, 2002
- **ELSAYED MOHAMMED ; A.E. EMARAH ; KH. EL-SHENNAWY.** Elliptic curve cryptosystems on smart cards. *SECURITY TECHNOLOGY, 2001 IEEE 35TH INTERNATIONAL CARNAHAN CONFERENCE ON,* Oktober 2001, ISBN 0-7803-6636-0, 213-222, http://ieeexplore.ieee.org/iel5/7622/20784/00962835.pdf?arnumber=962835
- Hardware implementation of an elliptic curve processor over GF(p). **ORS S B et al.** APPLICATION-SPECIFIC SYSTEMS, ARCHITECTURES, AND PROCESSORS, 2003. PROCEEDINGS. IEEE INTERNATIONAL CONFERENCE ON. IEEE, 24. Juni 2003, 420-430
- ASSOCIATION FOR COMPUTING MACHINERY: ''UNTRACEABLE RFID TAGS VIA INSUBVERTIBLE ENCRYPTION. **ATENIESE G et al.** PROCEEDINGS OF THE 12TH. ACM, 07. November 2005
- **DANIEL ENGELS ; RONALD RIVEST ; SANJAY SARMA ; STEPHEN WEIS.** Security and privacy aspects of low-cost radio frequency identification systems. *International Conference on Security in Pervasive Computing,* Marz 2003
- **DANIEL ENGELS ; SANJAY SARMA ; STEPHEN WEIS.** RFID systems and security and privacy implications. *Cryptographic Hardware and Embedded Systems - CHES,* August 2003
- **MARTIN FELDHOFER ; SANDRA DOMINIKUS ; JOHANNES WOLKERSTORFER.** Strong Authentication for RFID Systems Using the AES Algorithm. *Workshop on Cryptographic Hardware Embedded Systems -CHES,* August 2004
- **MIYAKO OHKUBO ; KOUTAROU SUZUKI ; SHINGO KINOSHITA.** Cryptographic Approach to Privacy-Friendly Tags. *RFID Privacy Workshop,* November 2003